(19) Europäisches Patentamt
European Patent Office
Office européen des brevets

(11) EP 1 349 234 A2

(12) EUROPEAN PATENT APPLICATION

(43) Date of publication:
**01.10.2003 Bulletin 2003/40**

(51) Int Cl.7: **H01Q 3/26**

(21) Application number: **03100783.4**

(22) Date of filing: **26.03.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **26.03.2002 GB 0207124**

(71) Applicant: **Thales Plc**
**Fleet, Hampshire GU51 3NY (GB)**

(72) Inventor: **Foti, Stephen Joseph**
**94117 CX ARCUEIL (FR)**

(74) Representative: **Lucas, Laurent Jacques et al**
**THALES Intellectual Property,**
**31-33 Avenue Briand**
**94117 Arcueil Cedex (FR)**

## (54) Compensation of mutual coupling in array antenna systems

(57) The method operates in transmit mode an array antenna system including a plurality of antenna elements (1-N) so that the signal radiated from the antenna has a desired antenna radiation pattern, by :

calculating, for each array element, the required pre-perturbed incident excitation ($a_i$) to compensate for the effects of mutual coupling with the other elements of the array, whereas, the required pre-perturbed incident excitation ($a_i$) for an array element generates, after mutual coupling, a resultant desired voltage ($v_i$) on the array element which, in combination with the other compensated elements of the array, produces the desired antenna radiation pattern, and
applying to each element of the array, the calculated pre-perturbed incident excitation ($a_i$) for said element.

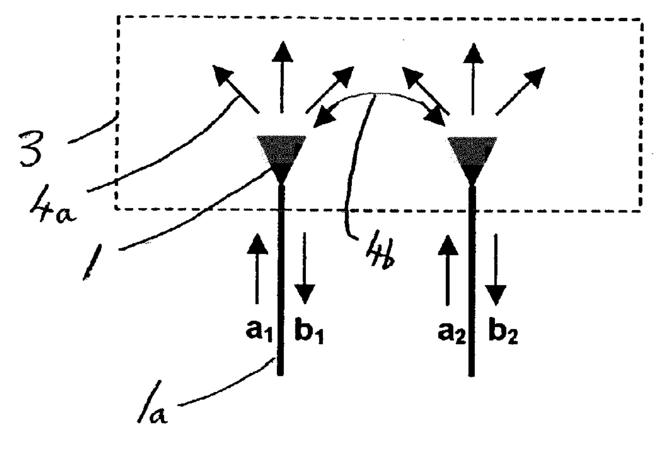


Figure 1

EP 1 349 234 A2

## Description

The invention relates to the field of array antennas i.e. an antenna consisting of a distributed group of individual antennas or elements.

Array antenna systems are employed in a wide variety of applications including: communications, radar, direction finding, guidance, interference cancellation and tracking. Arrays are utilised whenever higher directive gain than that of a single antenna element is required and/or it is desired to control and change the radiation beam pattern by adjustment of the relative excitation of the array element signals. Arrays also offer the possibility of providing multiple simultaneous beams.

In a military application, extremely rapid 'beam scanning' and/or adaptive nulling of interferers are typically executed by electronic commands to the array. In such antenna arrays wherein there is decision-making intelligence built into the array control, the antenna is referred to as a SMART antenna. Furthermore, in such systems, it is very important to minimise 'sidelobes' (extraneous lower lobes outside the main beam) so that, false 'target lock-ons' do not occur.

In commercial mobile telecom systems, SMART antenna arrays can increase communications traffic capacity for a given bandwidth of the electromagnetic spectrum by providing a SDMA (Spatial Division Multiple Access) feature. Such systems could also offer multiple simultaneous tracking of mobile telephone users and/or adaptive nulling of interferers.

All of the array antenna applications mentioned above would typically require complex RF hardware as well as analogue and digital processing/control circuitry and as such represent expensive product developments.
An undesirable characteristic of an array antenna that degrades the performance of all of the systems discussed above is that of mutual coupling between the array elements. This is due to the fact that the instantaneous radiation pattern of an array antenna is largely affected by the voltage distribution (magnitude & phase) on the array element terminals. For example, in the transmit mode, an incident excitation distribution provided by a set of generators or a power divider network is perturbed by mutual coupling between array elements which in turn affects the radiation pattern in a degrading fashion.

Schemes to reduce mutual coupling have been suggested and implemented with varying degrees of effectiveness. Current solutions to control the effect of mutual coupling in array antennas include for example the use of a "WAIM" sheet (wide angle impedance matching) usually in the form of a sheet of dielectric material placed in front of the array elements. Another solution is the use of baffles, typically in the form of metallic earthed plates or posts suitably located in or around the antenna array. These solutions rely heavily on rather onerous trial and error experimentation.

An aspect of the present invention is to compensate for mutual coupling by deducing a 'perturbed' incident excitation (considering the transmit mode) or a set of signal combining weights (considering the receive mode) based upon knowledge of the mutual coupling coefficients of the array. Embodiments of the present invention can be implemented using a computational algorithm and this would not only enhance the performance of the systems discussed above but would provide the desired feature for future software radio systems of software reconfigurability e.g. by downloading new software at the transmitter controller/receiver e.g. from a remote location.

The mutual coupling compensation scheme of the present invention can be implemented in hardware, software or a hybrid of the two, its main advantage is that preferably it requires no changes to the radiating structure of the array, it only requires an acknowledgement that the mutual coupling exists (and can be determined)typically by direct measurement) and that a "pre-perturbed" element excitation (transmission)/weighting (reception) (from that which would be required for an array with zero mutual coupling) can be used to compensate for the effect.

According to one aspect of the present invention, there is provided a method of operating an array antenna system, including the steps of:

> taking the respective signals to be applied to each element of the array, and modifying the signals so as to compensate for the effect of mutual coupling between the elements so as to produce a desired antenna radiation pattern.

According to another aspect of the present invention, there is provided a method of operating, in transmit mode, an array antenna system including a plurality of antenna elements so that the signal radiated from the antenna has a desired antenna radiation pattern, by calculating, for each array element, the required pre-perturbed incident excitation to compensate for the effects of mutual coupling with the other elements of the array, the required pre-perturbed incident excitation for an array element being that which, after mutual coupling, will produce a desired resultant voltage on the array element which, in combination with the other compensated elements of the array, produces the desired antenna radiation pattern, and applying to each element of the array, the calculated pre-perturbed incident excitation for said element.

According to another aspect of the present invention, there is provided a transmitter array antenna system

including:

a plurality of antenna elements for radiating a signal in a desired antenna radiation pattern,

calculating means for calculating e.g. using a stored software algorithm, for each array element, the required pre-perturbed incident excitation to compensate for the effects of mutual coupling with the other elements of the array, the required incident excitation for an array element being that which, after mutual coupling, will produce a desired resultant voltage on the array element which, in combination with the other compensated elements of the array, will produce the desired antenna radiation pattern, and

drive means for applying to each element of the array, the calculated pre-perturbed incident excitation for said element. The calculating means and drive means can for example be part of (e.g. located in) the antenna controller i.e. at the antenna site.

Preferably the system of the present invention is of the type where it is required to make rapid changes to the radiation pattern of the antenna in real time and the system may include, for example, control means (e.g. software) of the generators connected to each of the array elements or of a single generator which excites an isolated power divider network which in turn excites the array elements. Alternatively, the system can include means for realising the required pre-perturbed excitation in hardware e.g. by means of an isolated RF network; however it would be possible but more difficult to change the output distribution of the network in real time. This is especially the case, as the amplitudes as well as the phases of the outputs would need to be changed to compensate for the effect of mutual coupling.

A goal for the future is to 'move' the digital interface as close to the actual RF antenna 'air interface' as possible. When this is achieved, a much greater degree of system functionality will be defined by software and this has been loosely referred to as 'Software Radio'. As such future systems evolve and multiple frequency bands and multiple standards are introduced, it may be possible to realise a 'universal' system whereby the functionality is 'software reconfigurable'. This goal is becoming more of a possibility as advances are made in: broadband RF stages, high-Resolution, high speed broadband A/D - D/A (analogue to digital & digital to analogue) conversion stages, high performance signal processing devices and software.

The required pre-perturbed incident excitation for each array element can be calculated based on the desired resultant voltage on the array element, the desired resultant voltage of each other element of the array and the mutual coupling coefficients between each other element of the array and said array element.

The desired resultant voltage on an array element should be understood to mean the which is required to produce, in combination with the other elements of the array, the desired antenna radiation pattern, assuming no mutual coupling effect.

The required incident excitation distribution ($a_i$) can be derived from the matrix calculation:

$$[a]=\{[U]+[S]^{-1}\}^{-1}[S]^{-1}[v]$$

where:

**[U]=** Unit (or Identity) matrix, i.e. an NxN square matrix all of whose elements are zero except the 'main diagonal' elements which are unity, and

$\mathbf{[S]^{-1}}$ is the inverse matrix of **[S]**

Preferably, the required pre-perturbed incident excitation ($a_i$) for each array element, taking mutual coupling into account, is calculated from time to time e.g. in real time to meet new system requirements, as such requirements may change. This may be e.g. by a software algorithm, or by downloading new software with changes made to the radiation pattern of the antenna (e.g. due to dynamic pattern changes in normal operation.

The calculating means preferably calculates the required pre-perturbed incident excitation in combination with/supplementary to another algorithm employed to determine array excitation but which has not or has not fully taken into account the effects of mutual coupling.

According to a further aspect of the present invention, there is provided a method of operating, in receive mode, an array antenna system including an array of antenna elements so as to have a desired antenna reception pattern, by:

calculating, for each array element, the required compensated weight to be applied to the signal output from each array element to compensate for the effects of mutual coupling with the other elements of the array, so that in combination with the other compensated elements of the array, the desired antenna reception pattern is achieved, and

applying to the signal output from each array element, the corresponding compensated weight.

According to a further aspect of the presents invention, there is provided a receiver array antenna system including:

an array of antenna elements,

calculating means for calculating e.g. using a stored software algorithm, for each array element, the required compensated weight to be applied to the signal output from each array element to compensate for the effects of mutual coupling with the other elements of the array, so that in combination with the other compensated elements of the array, the desired antenna reception pattern is achieved, and

compensating means for applying to the signal output from each array element, the corresponding compensated weight. The calculating means and compensating means can for example be part of (e.g. located in) the antenna receiver i.e. at the antenna site.

Preferably, the system of the present invention is of the type in which, operated in receive mode, it is required to make changes to the reception pattern of the antenna e.g. in real time, by changing the weights $W_1$ to $W_N$ (e.g. applied in software) to the signal values (e.g. after A/D conversion) from each of the array elements of the antenna.

The required compensated weight ($W_i$) for each array element can be calculated based on the zero mutual coupling weight ($W_i^{(0)}$) of each of the respective array elements, the zero mutual coupling weight of each other element of the array and the mutual coupling coefficients (S) between each other element of the array and said array element, whereby the zero mutual coupling weight ($W_i^{(0)}$) of an array element is the theoretical weight required to achieve, in combination with the other elements of the array, the desired antenna reception pattern, assuming no mutual coupling effect.

The required compensated weight ($W_i$) can be derived from the matrix calculation

$$[W]=\{[U]+[S]^{-1}\}^{-1}[S]^{-1}[W^{(0)}]$$

where:

**[U]=** Unit (or Identity) matrix, i.e. an NxN square matrix all of whose elements are zero except the 'main diagonal' elements which are unity, and

**[S]$^{-1}$** is the inverse matrix of **[S]**

The required compensated weight ($W_i$) for each array element, taking mutual coupling into account, can be calculated in real time e.g. by a software algorithm, with changes made to the reception pattern of the antenna e.g. due to dynamic pattern changes in normal operation or to meet new system requirements.

## Brief Description of the Drawings

The invention will now be described by way of example, with reference to the accompanying drawings.

Fig.1 is a schematic illustration of a simple two-element array operated in transmit mode.

Fig.2 is a schematic illustration of a simple two-element array operated in receive mode and combiner.

Fig.3 is a schematic illustration of a generalised N element array operated in transmit mode.

Fig.4 is a schematic illustration of a generalised N element array operated in receive mode and receiver.

## Description of the Preferred Embodiments

### Case A

The present invention as applied to a two element array antenna in transmit mode will now be described.

A simple two element array in the transmit mode, excited e.g. by generators matched to the characteristic impedance of the connection 1a (transmission lines) connecting them to the elements 1, is shown in Figure 1.

In Fig. 1, the two transmitting antenna elements 1 of antenna array 3 are connected via their respective connections 1a to the outputs of respective matched generators (not shown), a generator being provided for each element. Alternatively, some or all of the connections 1a can be connected to respective outputs of a power divider (ideally an isolated power divider) network excited by a single generator. In Fig.1, $a_1$ represents the voltage applied by the generator of element 1 to element 1 and $b_1$ represents the voltage in element 1 as a result of mutual coupling from element 2. The same reasoning applies likewise to the two components $a_2$ and $b_2$ of the voltage on element 2.

The following relation applies to a two element array:

$$\begin{pmatrix} b_1 \\ b_2 \end{pmatrix} = \begin{pmatrix} S_{11} & S_{12} \\ S_{21} & S_{22} \end{pmatrix} \begin{pmatrix} a_1 \\ a_2 \end{pmatrix}$$

This is based on the following assumptions:

1. The elements are well matched in a passive terminated array environment. Thus: $\mathbf{S_{11}=S_{22}=O}$. This is not a necessary assumption for the present invention and is only assumed here for ease of understanding of this example.
2. There are no non-reciprocal devices in the array elements themselves. Thus: $\mathbf{S_{12}=S_{21}}$. This is not a necessary assumption for the present invention and is only assumed here for ease of understanding of this example.
3. The desired voltage distribution to the array is by definition $\mathbf{v}_i=|\mathbf{v}_i|\,\mathbf{e}^{j\arg(v_i)}$. This distribution is typically determined by an appropriate synthesis procedure wherein the element voltages are determined by knowledge of the required array radiation pattern shape at a specific moment in time. Such procedures require an accurate knowledge of the element locations, orientations and element radiation pattern properties including polarisation in the presence of a terminated array environment.

The normal degrading effects of mutual coupling are as follows:

(i) The element reflection coefficient is greater than zero and varies with excitation. Where reflection coefficient $= \Gamma_i = \mathbf{b}_i/\mathbf{a}_i$. This causes the generators to drive unmatched terminations (the radiation impedances of the elements) and reduces the radiated power, thus reducing gain to some degree.

(ii) The pre-perturbed incident excitation ($\mathbf{a_1}$) does not produce the same (desired) voltage due to the finite $\mathbf{b}_i$**s,** i.e. $\mathbf{v_i}$ is not equal to $\mathbf{a_i}$.

The compensation scheme according to the present invention will compensate the degrading effect (ii) above, but not (i). It is accepted that (i) will exist, but for a well designed RF radiating structure, the degradation caused by effect (i) should be acceptable in most operational scenarios. The compensation scheme of the present invention is a method of causing a practical antenna array to overcome the degrading effect described in (ii) above to a great extent.

One way of implementing the mutual coupling compensation scheme of the present invention involves the following steps:

<u>Step(1):</u> Determine the mutual coupling coefficients of the scattering matrix (i.e. $\mathbf{S}_{ij}$, **i** not = **j**). Possible methods include: computation using electromagnetic simulation software, direct measurement prior to connection to the rest of the system or possibly real time measurement and monitoring/updating during operation (for example, in order to account for temperature changes, structural changes, etc...).

<u>Step (2):</u> Carry out the following calculations (algorithm):

$$a_1=(v_1-S_{21}\,v_2)\,/\,(1-S_{21}^{\;2})$$

and

$$a_2=(v_2-S_{21}\,v_1)\,/\,(1-S_{21}^{\;2})$$

where, for element i, $\mathbf{v_i}$ represents the ideal desired resultant element voltage distribution to achieve a desired radiation pattern (for example, a scanned beam with a very low sidelobe pattern, possibly with nulls in particular directions which would be very sensitive to errors in achieving the desired distribution), then a 'pre-perturbed' incident excitation $\mathbf{a_i}$ must be produced by the generators so that after the effect of mutual coupling, the correct voltage distribution $\mathbf{v_i}$ will exist.

Case B:

Considering the same simple two element array of Case A above, but now operating in the receive mode. Figure 2 shows the received signals from the elements being weighted by $\mathbf{W_i}$ (complex weights) before the combining function. The weights and/or the combining function can be implemented in software after appropriate A/D (analogue-to-digital) conversion and there may or may not be electronic circuitry such as low noise amplifiers (LNAs) prior to the weights or the combiner.

In Fig. 2, the two receiving antenna elements 2 of antenna array 3' are connected via their respective connections to the array antenna combiner 2b. An incident wave 4a from an arbitrary direction is also illustrated, as well as scattered waves 4a and coupled waves 4b' (i.e. mutual coupling). The scattered waves 4a and coupled waves 4b' are waves which are re-emitted from respective elements of the array as a result of the voltage distribution in the elements caused by the incident wave. The combiner 2b applies compensated weights $W_1$ and $W_2$ , e.g. by multiplication, to the signals received respectively from the two elements 2 by means of weight blocks 2c. The outputs of the two weight blocks 2c are summed in summation block 2d and output as the combiner output signal $V_{out}$. The output signal $V_{out}$ has therefore been compensated for the effects of mutual coupling between the elements 2.

The following relation applies to a two element array:

$$\begin{pmatrix} b_1 \\ b_2 \end{pmatrix} = \begin{pmatrix} S_{11} & S_{12} \\ S_{21} & S_{22} \end{pmatrix} \begin{pmatrix} a_1 \\ a_2 \end{pmatrix}$$

This is based on the following assumptions:

1. The elements are well matched in a passive terminated array environment. Thus: $\mathbf{S_{11}=S_{22}=0.}$ This is not a necessary assumption for the present invention and is only assumed here for ease of understanding of this example.

2. There are no non-reciprocal devices in the array elements themselves. Thus: $\mathbf{S_{12}=S_{21}.}$ This is not a necessary assumption for the invention and is only assumed here for ease of understanding of this example.

3. The input impedances of the receiver interface (i.e. the terminations of the transmission lines connected to the elements) are matched to the transmission lines.

4. The zero mutual coupling weights are equal by definition to $\mathbf{W_i}^{(0)}$ (complex) and the compensated weights are equal by definition to $\mathbf{W_i}$. The zero mutual coupling weights are typically determined by an appropriate synthesis procedure wherein the element weights are determined by knowledge of the required array radiation pattern shape at a specific moment in time. Such procedures require an accurate knowledge of the element locations, orientations and element radiation pattern properties including polarisation in the presence of a terminated array environment. It will now be explained mutual coupling should be compensated in the receive mode of operation. In the transmit mode, waves are transmitted in all directions (with a relative angular strength governed by the shape of the radiation pattern), whilst in the receive mode one envisions the response of the array due to a wavefront incident from a single direction. However, the receive pattern represents the angular response of the array to waves incident from all directions. Furthermore, it is well known that the distribution of currents on the conducting surfaces of the array structure is different in the receive and transmit modes. Fortunately, utilization of the Lorentz reciprocity theorem (for the transmit and receive patterns) from general antenna theory allows us to deduce the compensated weights from the zero mutual coupling weights by analogy to the relationship between the incident excitation distribution from the desired voltage distribution for the same array operating in the transmit mode.

One way of implementing the mutual coupling compensation scheme of the present invention for the receive mode, involves the following steps:

<u>Step(1):</u> Determine the mutual coupling coefficients of the scattering matrix (i.e. $\mathbf{S_{ij}}$, **i** not = **j**). Possible methods include: computation using electromagnetic simulation software, direct measurement prior to connection to the rest of the system or possibly real time measurement and monitoring/updating during operation (for example, in

order to account for temperature changes, structural changes, etc ...).

<u>Step (2) :</u> Carry out the following calculations (algorithm):

$$W_1=(W_1^{(0)}-S_{21}W_2^{(0)})/(1-S_{21}^2)$$

and

$$W_2=(W_2^{(0)}-S_{21}W_1^{(0)})/(1-S_{21}^2)$$

<u>Case C:</u>

Considering a generalisation of Case A to an array of an arbitrary number of elements 1 distributed in an arbitrary geometry and operating in the transmit mode excited by generators matched to the characteristic impedance of the connections 1a (transmission lines) connecting them to the elements 1, as shown in Figure 3.

In Fig.3, the antenna array 3 has a number N of transmitting array elements 1 which are connected via their connections 1a to the respective outputs of matched generators (not shown), a generator being provided for each element 1. Alternatively, the connections 1a may connect the outputs of a power divider (ideally an isolated power divider) network excited by a single generator. In Fig.3, $a_1$ represents the voltage applied to element 1 by its respective generator and $b_1$ represents the voltage on element 1 as a result of mutual coupling from the remaining elements 2-N of the array. The same reasoning applies to the voltages $a_i$ and $b_i$ in the other elements 1 of the array 3. Also illustrated in Fig.3 are the transmitted waves 4a emanating from elements 1 and examples of the mutually coupled waves 4b between the elements 1. It should however be understood that each of the elements 1 couples to each of the remaining elements 1 of the array 3 and not all are illustrated. The elements 1 can be arranged to have an arbitrary 3D location and/or orientation.

The following relation applies to an N element array:

$$\begin{bmatrix} b_1 \\ b_2 \\ \vdots \\ b_i \\ \vdots \\ b_N \end{bmatrix} = \begin{pmatrix} S_{11} & S_{12} \ldots & S_{1i} \ldots & S_{1N} \\ S_{21} & S_{22} \ldots & \ldots & \ldots \\ \vdots & & & \vdots \\ S_{i1} & \ldots & S_{ii} & \ldots \\ \vdots & & & \vdots \\ S_{N1} & \ldots & \ldots & S_{NN} \end{pmatrix} \begin{bmatrix} a_1 \\ a_2 \\ \vdots \\ a_i \\ \vdots \\ a_N \end{bmatrix}$$

Where: **[b]=[S][a],** and **[b]** & **[a]** are N element column vectors and **[S]** is an N x N matrix. i.e.:

This is based on the following assumptions:

1. The elements are not necessarily well matched even in a passive terminated array environment. Thus $\mathbf{S_{ii}}$**, i = 1,2,.....N** are not necessarily zero.

2. There may be non-reciprocal devices in the array elements themselves. Thus: $\mathbf{S_{ij}}$ is not necessarily equal to $\mathbf{S_{ji}}$**, i, j = 1,2, ····· N.** This could occur, for example, when each array element incorporated an integrated T/R (transmit/receive) module and/or a non-reciprocal device such as a ferrite phase shifter.

3. The desired voltage distribution to the array is by definition $\mathbf{v_i=|v_i|\ e^{j\arg(v_i)}}$. This distribution is typically determined by an appropriate synthesis procedure wherein the element voltages are determined by knowledge of the required array radiation pattern shape at a specific moment in time. Such procedures require an accurate knowledge of the element locations, orientations and element radiation pattern properties including polarisation in the presence of a terminated array environment.

The normal degrading effects of mutual coupling are as follows.

(i) The element reflection coefficient is greater than zero and varies with excitation. Where reflection coefficient **=** $\Gamma_i$**=**$\mathbf{b}_i/\mathbf{a}_i$. This causes the generators to drive unmatched terminations (the radiation impedances of the elements) and reduces the radiated power, thus reducing gain to some degree.

(ii) The excitation distribution ($\mathbf{a_i}$) does not produce the same (desired) voltage distribution due to the finite $\mathbf{b_i}$**s,** i. e. $\mathbf{v_i}$ is not equal to $\mathbf{a_i}$**.**

The compensation scheme according to the present invention will compensate the degrading effect (ii) above, but not (i). It is accepted that (i) will exist, but for a well designed RF radiating structure, the degradation caused by effect (i) should be acceptable in most operational scenarios. This is the price to be paid for implementation of the scheme. The compensation scheme of the present invention is a method of causing a practical antenna array to overcome the degrading effect described in (ii) above to a great extent.
One way of implementing the mutual coupling compensation scheme of the present invention involves the following steps:

Step(1): Determine the full scattering matrix (i.e. the mutual coupling coefficients ($\mathbf{S_{ij}}$) and the 'passive' element reflection coefficients ($\mathbf{S_{ii}}$)). Possible methods include: computation using electromagnetic simulation software, direct measurement prior to connection to the rest of the system or possibly real time measurement and monitoring/ updating during operation (for example, in order to account for temperature changes, structural changes, etc...).

Step(2): Carry out the following matrix calculation (algorithm):

$$[a]=\{[U]+[S]^{-1}\}^{-1}[S]^{-1}[v]$$

where:
**[U] =** Unit (or Identity) matrix, i.e. an NXN square matrix all of whose elements are zero except the 'main diagonal' elements which are unity,
$\mathbf{[S]^{-1}}$ is the inverse matrix of **[S]**
and [S] is the scattering matrix of the antenna array
where, for element i, $\mathbf{v}_i$ represents the ideal desired resultant element voltage distribution to achieve a desired radiation pattern (for example, a scanned beam with a very low sidelobe pattern, possibly with nulls in particular directions which would be very sensitive to errors in achieving the desired distribution), then a 'pre-perturbed' incident excitation $\mathbf{a_i}$ must be produced by the generators so that after the effect of mutual coupling, the correct voltage distribution $\mathbf{v_i}$ will exist.

Case D:

Considering the same generalised N element array of Case C above, but now operating in the receive mode. Figure 4 shows the received signals from the elements being weighted by $\mathbf{W_i}$ (complex weights) before the combining function. The weights and/or the combining function may actually be implemented in software and there may or may not be electronic circuitry such as low noise amplifiers (LNAs) prior to the weights or the combiner.
In Fig.4, the antenna array 3' has a number N of receiving array elements 2 connected via connections to the array antenna combiner 2b. An incident wave 4 from an arbitrary direction is also illustrated. The combiner 2b applies compensated weights $W_1$-$W_N$, e.g. by multiplication, to respective signals received from elements 2, by means of N weight blocks 2c. The outputs of the N weight blocks are summed in summation block 2d and output as the combiner output signal $V_{out}$ which is therefore compensated for the effects of mutual coupling between the elements 2. Also illustrated in Fig.4 are the scattered waves 4a' and mutually coupled waves 4b' already described for Fig.2. It should however be understood that the mutually coupled waves 4b' are between each element 2 and each of the remaining elements 2 of the array 3', of which not all are illustrated. Also, the elements 2 can be arranged to have an arbitrary 3D location and/or orientation.
The following relation applies to an N element array:

$$\begin{pmatrix} b_1 \\ b_2 \\ \vdots \\ b_i \\ \vdots \\ b_N \end{pmatrix} = \begin{pmatrix} S_{11} & S_{12} \ldots & S_{1i} \ldots & S_{1N} \\ S_{21} & S_{22} \ldots & \ldots & \ldots \\ & \vdots & & \\ S_{i1} & \ldots & S_{ii} & \ldots \\ & \vdots & & \\ S_{N1} & \ldots & \ldots & S_{NN} \end{pmatrix} \begin{pmatrix} a_1 \\ a_2 \\ \vdots \\ a_i \\ \vdots \\ a_N \end{pmatrix}$$

Where: **[b]=[S][a],** and **[b]** & **[a]** are N element column vectors and **[S]** is an N x N matrix. i.e.:

This is based on the following assumptions:

1. The elements are not necessarily well matched even in a passive terminated array environment. Thus $\mathbf{S}_{ii}$, **i = 1,2, .....N** are not necessarily zero.

2. There may be non-reciprocal devices in the array elements themselves. Thus: $\mathbf{S}_{ij}$ is not necessarily equal to $\mathbf{S}_{ji}$**, i, j=1,2, ·····N.** This could occur, for example, when each array element incorporated an integrated T/R (transmit/receive) module and/or a non-reciprocal device such as a ferrite phase shifter.

3. The input impedances of the receiver interface (i.e. the terminations of the transmission lines connected to the elements) are matched to the transmission lines.

4. The zero mutual coupling weights are equal by definition to $\mathbf{W}_i^{(0)}$ (complex) and the compensated weights are equal by definition to $\mathbf{W}_i$. The zero mutual coupling weights are typically determined by an appropriate synthesis procedure wherein the element voltages are determined by knowledge of the required array radiation pattern shape at a specific moment in time. Such procedures require an accurate knowledge of the element locations, orientations and element radiation pattern properties including polarisation in the presence of a terminated array environment.

It will now be explained how mutual coupling should be compensated in the receive mode of operation. In the transmit mode, waves are transmitted in all directions (with a relative angular strength governed by the shape of the radiation pattern), whilst in the receive mode one envisions the response of the array due to a wavefront incident from a single direction. However, the receive pattern represents the angular response of the array to waves incident from all directions. Furthermore, it is well known that the distribution of currents on the conducting surfaces of the array structure is different in the receive and transmit modes. Fortunately, utilization of the Lorentz reciprocity theorem (for the transmit and receive patterns) from general antenna theory allows us to deduce the compensated weights from the zero mutual coupling weights by analogy to the relationship between the incident excitation distribution from the desired voltage distribution for the same array operating in the transmit mode.

One way of implementing the mutual coupling compensation scheme of the present invention for the receive mode, involves the following steps:

Step(1): Determine the full scattering matrix (i.e. the mutual coupling coefficients of the scattering matrix ($S_{11}$) and the 'passive' element reflection coefficients ($S_{11}$)). Possible methods include: computation using electromagnetic simulation software, direct measurement prior to connection to the rest of the system or possibly real time measurement and monitoring/updating during operation (for example, in order to account for temperature changes, structural changes, etc...).

Step(2): Carry out the following matrix calculation (algorithm):

$$[W]=\{[U]+[S]^{-1}\}^{-1}[S]^{-1}[W^{(0)}]$$

where:
**[U] =** Unit (or Identity) matrix, i.e. an NXN square matrix all of whose elements are zero except the 'main diagonal' elements which are unity,
**$[S]^{-1}$** is the inverse matrix of **[S],**
and [S] is the scattering matrix of the antenna array.
Note: **[W]** & **$[W^{(0)}]$** where defined in assumption (4) above.

## Claims

1. Method of operating, in transmit mode, an array antenna system including a plurality of antenna elements (1-N) so that the signal radiated from the antenna has a desired antenna radiation pattern, by:

    calculating, for each array element, the required pre-perturbed incident excitation ($a_i$) to compensate for the effects of mutual coupling with the other elements of the array, the required pre-perturbed incident excitation ($a_i$) for an array element being that which, after mutual coupling, will produce a resultant desired voltage ($V_i$) on the array element which, in combination with the other compensated elements of the array, produces the desired antenna radiation pattern, and
    applying to each element of the array, the calculated pre-perturbed incident excitation ($a_i$) for said element.

2. The method according to claim 1 wherein the required pre-perturbed incident excitation ($a_i$) for each array element is calculated based on the desired resultant voltage ($V_i$) on the array element, the desired resultant voltage of each other element of the array and the mutual coupling coefficients between each other element of the array and said array element,
the desired resultant voltage ($V_i$) on an array element being the voltage required to produce, in combination with the other elements of the array, the desired antenna radiation pattern, assuming no mutual coupling effect.

3. The method of claim 1 or 2 wherein the required pre-perturbed incident excitation ($a_i$) is derived from the matrix calculation:

$$[a]=\{[U]+[S]^{-1}\}^{-1}[S]^{-1}[v]$$

where:
**[U]=** Unit (or Identity) matrix, i.e. an NxN square matrix all of whose elements are zero except the 'main diagonal' elements which are unity,
**$[S]^{-1}$** is the inverse matrix of **[S],** and [S] is the scattering matrix of the antenna array.

4. The method of any preceding claim wherein the required pre-perturbed incident excitation ($a_i$) for each array element is calculated in real time with changes made to the radiation pattern of the antenna.

5. A transmitter array antenna system including:

    a plurality of antenna elements (1-N) for radiating a signal in a desired antenna radiation pattern, calculating means for calculating, for each array
    element, the required pre-perturbed incident excitation ($a_i$) to compensate for the effects of mutual coupling with the other elements of the array, the required pre-perturbed incident excitation ($a_i$) for an array element being that which, after mutual coupling, will produce a desired resultant voltage ($V_i$) on the array element which, in combination with the other compensated elements of the array, will produce the desired antenna radiation pattern, and
    drive means for applying to each element of the array,
    the calculated pre-perturbed incident excitation ($a_i$) for said element.

6. The antenna system of claim 5 wherein said calculating means is arranged to calculate the required pre-perturbed incident excitation ($a_i$) for an array element based on the desired resultant voltage ($V_i$) on the array element, the desired resultant voltage of each other element of the array and the mutual coupling coefficients between each other element of the array and said array element,
the desired resultant voltage ($V_i$) on an array element being the voltage required to produce, in combination with

the other elements of the array, the desired antenna radiation pattern, assuming no mutual coupling effect.

**7.** The system of claims 5 or 6 wherein the calculating means is arranged to calculate the required pre-perturbed incident excitation ($a_i$) for each array element in real time with changes made to the radiation pattern of the antenna.

**8.** Method of operating, in receive mode, an array antenna system including an array of antenna elements (1-N) so as to have a desired antenna reception pattern, by:

calculating, for each array element, the required compensated weight ($W_i$) to be applied to the signal output from each array element to compensate for the effects of mutual coupling with the other elements of the array, so that in combination with the other compensated elements of the array, the desired antenna reception pattern is achieved, and
applying to the signal output from each array element, the corresponding compensated weight ($W_i$).

**9.** The method according to claim 8 wherein the required compensated weight ($W_i$) for each array element is calculated based on the zero mutual coupling weight ($W_i^{(0)}$) of said array element, the zero mutual coupling weight of each other element of the array and the mutual coupling coefficients between each other element of the array and said array element,
the zero mutual coupling weight ($W_i^{(0)}$) of an array element being the theoretical weight required to achieve, in combination with the other elements of the array, the desired antenna reception pattern, assuming no mutual coupling effect.

**10.** The method of claim 8 or 9 wherein the required compensated weight ($W_i$) is derived from the matrix calculation

$$[W]=\{[U]+[S]^{-1}\}^{-1}[S]^{-1}[W^{(0)}]$$

where:
**[U]=** Unit (or Identity) matrix, i.e. an NxN square matrix all of whose elements are zero except the 'main diagonal' elements which are unity,
**$[S]^{-1}$** is the inverse matrix of **[S],** and [S] is the scattering matrix of the antenna array.

**11.** The method of any of claims 8 to 10 wherein the required compensated weight ($W_i$) for each array element is calculated in real time with changes made to the reception pattern of the antenna.

**12.** A receiver array antenna system including:

an array of antenna elements (1-N),
calculating means for calculating, for each array element, the required compensated weight ($W_i$) to be applied to the signal output from each array element to compensate for the effects of mutual coupling with the other elements of the array, so that in combination with the other compensated elements of the array, the desired antenna reception pattern is achieved, and
compensating means for applying to the signal output from each array element, the corresponding compensated weight ($W_i$).

**13.** The system of claim 12 wherein the calculation means is arranged to calculate the required compensated weight ($W_i$) for each array element based on the zero mutual coupling weight ($W_i^{(0)}$) of the array element, the zero mutual coupling weight of each other element of the array and the mutual coupling coefficients between each other element of the array and said array element,
the zero mutual coupling weight ($W_i^{(0)}$) of an array element being the theoretical weight required to achieve, in combination with the other elements of the array, the desired antenna reception pattern, assuming no mutual coupling effect.

**14.** The system of either of claims 12 and 13 wherein the calculating means is arranged to calculate the required compensated weight ($W_i$) for each array element in real time with changes made to the reception pattern of the antenna.

**15.** The method or system substantially as any one embodiment herein described with reference to the accompanying drawings.

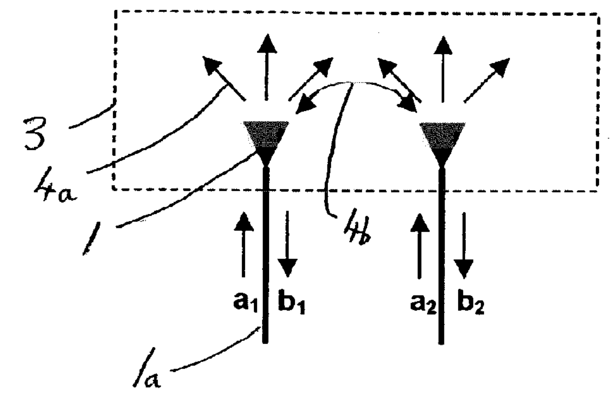


*Figure 1*

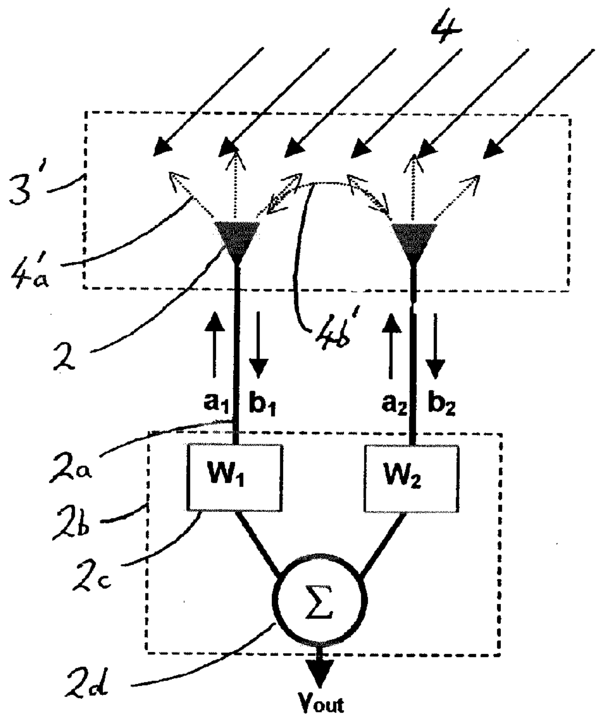


*Figure 2:*

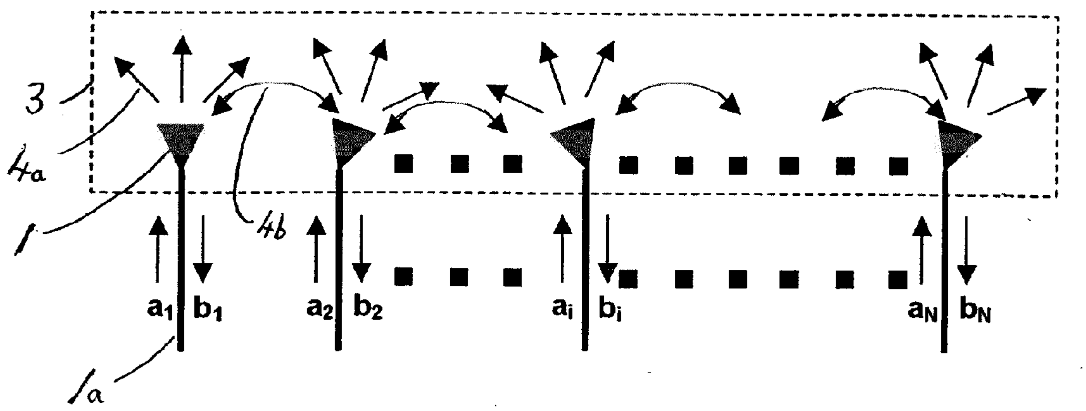


*Figure 3*

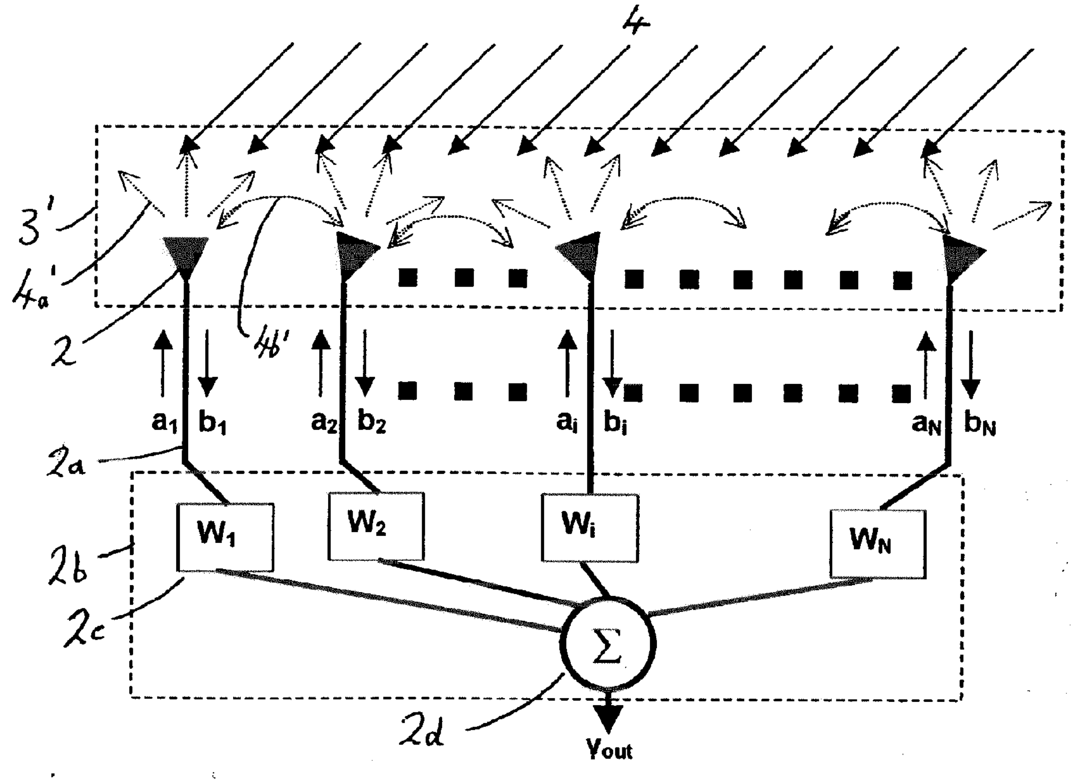


*Figure 4*